# EUROPEAN PATENT APPLICATION

(11) **EP 4 760 956 A1**
(43) Date of publication of application: **17.06.2026**
(21) Application number: 24921374.5
(22) Date of filing: 16.08.2024
(51) Int. Cl.: H01M 50/471, H01M 50/258

(54) **BATTERY PACK AND ENERGY STORAGE SYSTEM**

(30) Priority: 02.02.2024 CN 202420265579 U
(71) Applicant: Huawei Digital Power Technologies Co., Ltd., Shenzhen, Guangdong 518043 (CN)
(72) Inventor: SHEN, Bingjie, Shenzhen, Guangdong 518043 (CN); LIU, Junpeng, Shenzhen, Guangdong 518043 (CN)
(74) Representative: Gill Jennings & Every LLP
(86) International application number: PCT/CN2024/112813
(87) International publication number: WO 2025/161348

(57) **Abstract**

A battery pack and an energy storage system are provided. A housing of the battery pack includes a battery compartment and an electrical compartment that are adjacently disposed in a length direction. The battery compartment is configured to accommodate a battery module. The battery module includes a plurality of electrochemical cells. The electrochemical cell includes a top surface and a bottom surface that are disposed opposite to each other in a height direction, and two poles are disposed on the top surface. The electrochemical cell is further provided with a vent valve, and the vent valve is located on the top surface or the bottom surface. The electrical compartment is configured to accommodate a power module. In an electrochemical cell that is of the battery module and that is close to the electrical compartment, a barrier strip is disposed between a surface on which the vent valve is located and an inner wall of the housing. The barrier strip is located on a side that is of the vent valve and that faces the electrical compartment, and is configured to isolate the vent valve from the power module. In the battery pack, the battery module and the power module are accommodated in same space. When internal pressure of the electrochemical cell is excessively high, the vent valve opens to release high-temperature gas and liquid. The barrier strip is located between the vent valve and the electrical compartment, which can prevent the high-temperature gas and the liquid from entering the electrical compartment, and implements electrical isolation of the battery pack.

## Description

### CROSS-REFERENCE TO RELATED APPLICATIONS

This application claims priority to Chinese Patent Application No. 202420265579.3, filed with the China National Intellectual Property Administration on February 2, 2024 and entitled "BATTERY PACK AND ENERGY STORAGE SYSTEM", which is incorporated herein by reference in its entirety.

### TECHNICAL FIELD

This application relates to the field of energy storage technologies, and in particular, to a battery pack and an energy storage system.

### BACKGROUND

An energy storage battery pack includes a battery module and a power control output module. The battery module and the power control output module need to be connected through a wire harness to implement a function of the battery pack. Currently, to facilitate arrangement and connection of the wire harness, the battery module and the power control output module are usually arranged in same space. When thermal runaway occurs in an electrochemical cell of the battery module, the electrochemical cell sprays high-temperature gas and an electrolyte through a vent valve on the top of the electrochemical cell. However, because the battery module and the power control output module are located in the same space, the high-temperature gas and the electrolyte directly intrude into the power control output module. This significantly increases a risk of a short circuit, high-voltage arcing, or even an explosion of the battery pack.

### SUMMARY

This application provides a battery pack and an energy storage system, to isolate a power module from a vent valve of an electrochemical cell, which implements electrical isolation of the battery pack, thereby reducing risks such as a short circuit and an explosion of the battery pack.

According to a first aspect, this application provides a battery pack. The battery pack specifically includes a housing. Internal space of the housing may include a battery compartment and an electrical compartment, and the battery compartment and the electrical compartment are adjacently disposed in a length direction of the housing. The battery compartment is configured to accommodate a battery module. The battery module includes a plurality of electrochemical cells. Each of the plurality of electrochemical cells includes a top surface and a bottom surface that are disposed opposite to each other in a height direction of the housing, and two poles are disposed on the top surface. In addition, each electrochemical cell is further provided with a vent valve, and the vent valve is located on the top surface or the bottom surface. The electrical compartment is configured to accommodate a power module. In an electrochemical cell that is of the plurality of electrochemical cells and that is close to the electrical compartment, a barrier strip is disposed between a surface on which the vent valve is located and an inner wall of the housing. The barrier strip is located on a side that is of the vent valve and that faces the electrical compartment, and the barrier strip is configured to isolate the vent valve from the power module. In the battery pack in this application, the battery module and the power module are jointly accommodated in the housing, and the battery module is connected to the power module through a wire harness. Each electrochemical cell is provided with a vent valve. When internal pressure of the electrochemical cell is excessively high, the vent valve opens to release gas inside the electrochemical cell, to avoid an explosion of the electrochemical cell. The barrier strip is located between the vent valve and the electrical compartment, which can isolate the vent valve from the power module. This prevents, without increasing a size of the battery pack, high-temperature gas and liquid that are sprayed when the vent valve opens from entering the electrical compartment, and implements electrical isolation of the battery pack.

In a possible implementation, in the height direction of the housing, a thickness of the barrier strip is equal to a distance between the surface on which the vent valve is located and the inner wall of the housing. In this way, the barrier strip fills a gap between the surface and the housing, thereby implementing electrical isolation structurally. For example, when the vent valve is located on the top surface of the electrochemical cell, the thickness of the barrier strip is equal to a distance between the top surface of the electrochemical cell and an inner top wall of the housing. When the vent valve is located on the bottom surface of the electrochemical cell, the thickness of the barrier strip is equal to a distance between the bottom surface of the electrochemical cell and an inner bottom wall of the housing.

A specific quantity of barrier strips in this application is not limited, and there may be one or more barrier strips. In a possible implementation, the barrier strip extends in a width direction of the housing. There may be one barrier strip. In the width direction, a length of the barrier strip is greater than a width of the battery module. In this way, after the battery pack is assembled, two ends of the barrier strip may fill a gap between the top of a side wall of the battery module and an inner side wall of the housing, to prevent high-temperature gas and liquid from entering the electrical compartment from the gap between the battery module and the inner side wall.

In the battery pack, a difference between the length of the barrier strip and the width of the battery module ranges from 1 millimeter to 2 millimeters, to avoid that the barrier strip is excessively long and is inconvenient for assembly.

In a possible implementation, there may alternatively be at least two barrier strips in this application. Specifically, the plurality of electrochemical cells include at least two electrochemical cells that are close to the electrical compartment, and the at least two electrochemical cells are sequentially disposed in a width direction of the housing. The at least two barrier strips and the at least two electrochemical cells correspond in quantity and are disposed in a one-to-one correspondence. In this implementation, a specific quantity of barrier strips may be set based on a quantity of electrochemical cells disposed in the width direction. Corresponding to each electrochemical cell, the barrier strip may isolate a vent valve of the electrochemical cell from the power module. In the width direction, a spacing between two adjacent barrier strips of the at least two barrier strips is less than or equal to a spacing between two adjacent electrochemical cells of the at least two electrochemical cells, so that a risk that high-temperature gas and liquid enter the electrical compartment from a part between the two adjacent electrochemical cells can be reduced.

A specific location of the vent valve on the electrochemical cell in this application is not limited. In a possible implementation, the vent valve is located on the top surface of the electrochemical cell, and the vent valve is located between the two poles. The two poles and the vent valve may be sequentially disposed in the width direction of the housing. Alternatively, the two poles and the vent valve may be sequentially disposed in the length direction of the housing.

In the battery pack, the plurality of electrochemical cells may include the at least two electrochemical cells that are close to the electrical compartment, and the at least two electrochemical cells are sequentially disposed in the width direction of the housing. In the at least two electrochemical cells, an insulating spacer is disposed between two adjacent electrochemical cells. In the width direction of the housing, a thickness of the insulating spacer is equal to a spacing between the two electrochemical cells, so that the insulating spacer may fill a gap between the two adjacent electrochemical cells, to prevent high-temperature gas and liquid that are sprayed from the vent valve from flowing into the electrical compartment from a part between the two electrochemical cells. In the height direction of the housing, a height of the insulating spacer may be greater than or equal to a distance between the top surface of the electrochemical cell and the bottom surface of the electrochemical cell. That is, the insulating spacer may extend from the top surface of the electrochemical cell to the bottom surface of the electrochemical cell, to further ensure that the high-temperature gas and the liquid do not flow into the part between the two adjacent electrochemical cells.

In a possible implementation, in the height direction of the housing, the insulating spacer extends out of the top surface of the electrochemical cell in a direction away from the bottom surface of the electrochemical cell. On a side that is of the top surface of the electrochemical cell and that is close to the pole, a distance between the top surface and an end that is of the insulating spacer and that is away from the bottom surface is greater than a height of the pole. That is, the height of the insulating spacer may be greater than the height of the pole, to further ensure that the high-temperature gas and the liquid do not flow into the part between the two adjacent electrochemical cells.

In a possible implementation, a difference between the height of the pole and the distance between the top surface and the end that is of the insulating spacer and that is away from the bottom surface ranges from 1 millimeter to 2 millimeters, to prevent assembly of the battery module from being affected due to an excessively high height of the insulating spacer.

In actual application, to ensure insulation between the pole and the housing, the battery module further includes an insulating film, and the insulating film is configured to insulate the pole of the electrochemical cell from the housing. The insulating film covers the two poles of each electrochemical cell. In the electrochemical cell that is of the plurality of electrochemical cells and that is close to the electrical compartment, at least a part of the insulating film is located between the barrier strip and the electrochemical cell. That is, the barrier strip is located on a side that is of the insulating film and that faces the inner wall of the housing.

In another possible implementation, the vent valve may alternatively be located on the bottom surface of the electrochemical cell. In this way, the two poles and the vent valve are located on two sides of the electrochemical cell, and the high-temperature gas and the liquid that are sprayed by the vent valve do not enter the electrical compartment under an action of the barrier strip.

In a possible implementation, the battery pack may further include a barrier. The barrier may be disposed on a side that is of the battery module and that faces the electrical compartment. In the width direction of the housing, a length of the barrier is greater than or equal to the width of the battery module. In this way, the barrier may separate the battery module from the electrical compartment as a whole, thereby further improving safety of the battery pack.

In a possible implementation, the housing is further provided with a pressure relief vent that opens when internal pressure of the battery pack is excessively high, to release gas inside the battery pack and avoid an explosion of the battery pack. The pressure relief vent is located on a side wall at an end that is of the battery compartment that is away from the electrical compartment. When the pressure relief vent opens, because the barrier strip can block the high-temperature gas and the liquid that are sprayed by the electrochemical cell from flowing to the electrical compartment, the high-temperature gas and the liquid flow in a reverse direction and flow out from the pressure relief vent, so that the safety of the battery pack is improved.

According to a second aspect, this application provides an energy storage system. The energy storage system includes the battery pack according to the first aspect and a power converter. The power converter is configured to: perform power conversion on electric energy output by an external power supply and output the converted electric energy to the battery pack. The battery pack of the energy storage system in this application can implement electrical isolation, so that risks such as a short circuit and an explosion of the battery pack are reduced, and safety of the energy storage system is improved.

### BRIEF DESCRIPTION OF DRAWINGS

FIG. 1 is a diagram of a battery pack according to an embodiment of this application;
FIG. 2 is another diagram of a battery pack according to an embodiment of this application;
FIG. 3 is another diagram of a battery pack according to an embodiment of this application;
FIG. 4 is another diagram of a battery pack according to an embodiment of this application;
FIG. 5 is a diagram of an electrochemical cell according to an embodiment of this application;
FIG. 6 is another diagram of a battery pack according to an embodiment of this application;
FIG. 7 is a diagram of a battery module according to an embodiment of this application;
FIG. 8 is another diagram of a battery module according to an embodiment of this application;
FIG. 9 is another diagram of a battery module according to an embodiment of this application; and
FIG. 10 is a diagram of a battery pack according to an embodiment of this application.

### Reference numerals:

10: battery pack
11: housing
12: battery module
13: power module
14: barrier strip
15: insulating spacer
111: battery compartment
112: electrical compartment
113: pressure relief vent
121: electrochemical cell
122: insulating film
1211: vent valve
1212: pole

### DESCRIPTION OF EMBODIMENTS

To make objectives, technical solutions, and advantages of this application clearer, the following further describes this application in detail with reference to the accompanying drawings.

It should be noted that, terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

To facilitate understanding of a battery pack and an energy storage system provided in embodiments of this application, the following describes an application scenario of the battery pack and the energy storage system. The energy storage system in this application may be used in a plurality of application scenarios including commercial and industrial energy storage and power station energy storage. The commercial and industrial energy storage may include, for example, small-scale commercial and industrial (such as a small factory) energy storage, medium-scale commercial and industrial energy storage, large-scale commercial and industrial energy storage, PV-storage-charging station energy storage, and small and medium-scale microgrid (such as an island) energy storage. The power station energy storage may include, for example, a wind-PV-storage power station, a grid-storage power station, and a large-scale microgrid power station. In addition, an energy storage device may be further used in application scenarios such as a data center and a vehicle charging station. The energy storage device accommodates a power converter and at least one battery pack. The power converter is configured to: perform power conversion on electric energy output by an external power supply and output the converted electric energy to the at least one battery pack. The battery pack may include a housing, and the housing accommodates a power module and at least one electrochemical cell. In this application, a vent valve is disposed on the electrochemical cell. When internal pressure of the electrochemical cell is excessively high, the vent valve opens, so that high-temperature gas and an electrolyte can be released from the vent valve, to avoid an explosion of the electrochemical cell.

However, when the power module and the electrochemical cell are in same space, the high-temperature gas and the electrolyte that are sprayed when the vent valve performs explosion venting on the electrochemical cell may intrude into the power module, causing a risk such as a short circuit, arcing, or even an explosion of the battery pack.

Therefore, this application provides a battery pack and an energy storage system, to isolate the power module from the vent valve of the electrochemical cell, which implements electrical isolation of the battery pack, thereby reducing risks such as a short circuit and an explosion of the battery pack.

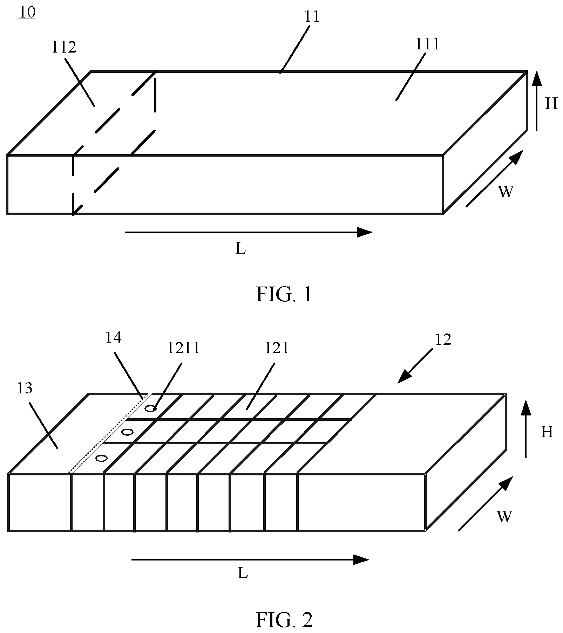

FIG. 1 is a diagram of a battery pack according to an embodiment of this application. As shown in FIG. 1, the battery pack 10 includes a housing 11. Internal space of the housing 11 may include a battery compartment 111 and an electrical compartment 112, and the battery compartment 111 and the electrical compartment 112 are adjacently disposed in a length direction L of the housing 11. It should be noted that the battery compartment 111 communicates with the electrical compartment 112. A dashed line in FIG. 1 merely shows a position relationship between the electrical compartment 112 and the battery compartment 111, and does not separate the battery compartment 111 from the electrical compartment 112 structurally. The battery compartment 111 is configured to accommodate a battery module. The electrical compartment 112 is configured to accommodate a power module. The power module may include a high-voltage device, a low-voltage device, a cable, another power device, and the like. The battery module is connected to the power module through a wire harness.

FIG. 2 is another diagram of a battery pack according to an embodiment of this application. A housing is omitted in FIG. 2. As shown in FIG. 2, in the battery compartment 111, a battery module 12 may include a plurality of electrochemical cells 121. These electrochemical cells 121 may include at least one group of electrochemical cells 121 that are sequentially disposed in the length direction L of the housing 11, and the at least one group of electrochemical cells 121 may include at least one electrochemical cell 121 that is sequentially disposed in a width direction W of the housing 11. Alternatively, these electrochemical cells 121 may include at least one group of electrochemical cells 121 that are sequentially disposed in a width direction W of the housing 11, and the at least one group of electrochemical cells 121 may include at least one electrochemical cell 121 that is sequentially disposed in the length direction L of the housing 11. That is, the battery module 12 in this application may include a row of electrochemical cells 121 that are sequentially disposed in the length direction L of the housing 11, or may include a column of electrochemical cells 121 that are sequentially disposed in the width direction W of the housing 11, or may include a plurality of electrochemical cells 121 that are distributed in an array. In the battery module 12, each electrochemical cell 121 may include a top surface and a bottom surface that are disposed opposite to each other in a height direction H of the housing 11, and two poles are disposed on the top surface.

In this application, the electrochemical cell 121 may be a prismatic electrochemical cell, and the prismatic electrochemical cell further includes four side surfaces that are sequentially connected. The four side surfaces are vertically connected between the top surface and the bottom surface. The four side surfaces include two first side surfaces that are disposed opposite to each other in the length direction L of the housing 11, and two second side surfaces that are disposed opposite to each other in the width direction W of the housing 11. In actual application, an area of the first side surface may be greater than an area of the second side surface. That is, the first side surface is a large surface of the electrochemical cell 121, and the large surface of the electrochemical cell 121 is disposed facing the electrical compartment 112. Alternatively, an area of the first side surface may be less than an area of the second side surface. That is, the second side surface is a large surface of the electrochemical cell 121. Certainly, the electrochemical cell 121 may alternatively be in a shape of a cylinder or another shape. This is not limited in this application.

Still Refer to FIG. 2. Each electrochemical cell 121 is further provided with a vent valve 1211, and the vent valve 1211 may be disposed on the top surface or the bottom surface of the electrochemical cell 121. In an electrochemical cell 121 that is of the plurality of electrochemical cells 121 and that is close to the electrical compartment, a barrier strip 14 is disposed between a surface on which the vent valve 1211 is located and an inner wall of the housing 11. The barrier strip 14 is located on a side that is of the vent valve 1211 and that faces the electrical compartment 112, and the barrier strip 14 is configured to isolate the vent valve 1211 from a power module 13. In the battery pack 10 in this application, the battery module 12 and the power module 13 are jointly accommodated in the housing 11, and the battery module 12 is connected to the power module 13 through a wire harness. Each electrochemical cell 121 is provided with the vent valve 1211 that opens when internal pressure of the electrochemical cell 121 is excessively high, to release gas inside the electrochemical cell 121 and avoid an explosion of the electrochemical cell 121. The barrier strip 14 is located between the vent valve 1211 and the electrical compartment 112, which can isolate the vent valve 1211 from the power module 13. This prevents, without increasing a size of the battery pack 10, high-temperature gas and liquid that are sprayed when the vent valve 1211 opens from entering the electrical compartment 112, and implements electrical isolation of the battery pack 10.

In the foregoing embodiment, the barrier strip 14 may be made of an insulating, high-temperature-resistant, flame-retardant, and compressible material, to effectively block the high-temperature gas and the liquid. For example, the barrier strip 14 may be a high-temperature-resistant silicone barrier strip or rubber barrier strip.

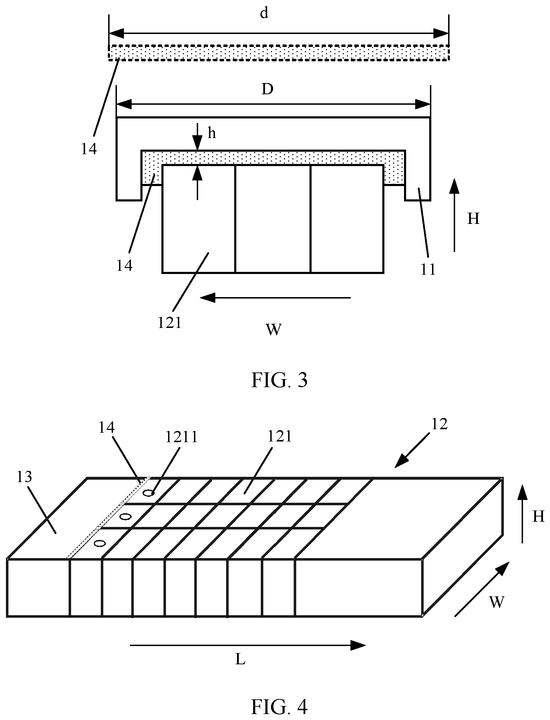

FIG. 3 is another diagram of a battery pack according to an embodiment of this application. As shown in FIG. 3, in the height direction H of the housing 11, a thickness h of the barrier strip 14 is equal to a distance between the surface on which the vent valve 1211 is located and the inner wall of the housing 11. In this way, the barrier strip 14 fills a gap between the surface and the inner wall, thereby implementing isolation between the battery compartment 111 and the electrical compartment 112 structurally. Before the battery pack 10 is assembled, the thickness of the barrier strip 14 may be greater than the distance between the surface on which the vent valve 1211 is located and the inner wall of the housing 11, and the barrier strip 14 is a compressible barrier strip. Therefore, when the battery pack 10 is assembled, the inner wall of the housing 11 and the electrochemical cell 121 squeeze the barrier strip 14, so that the barrier strip 14 fills the gap.

A specific quantity of barrier strips 14 in this application is not limited, and there may be one or more barrier strips 14. In an embodiment, the barrier strip 14 extends in the width direction W of the housing 11. There may be one barrier strip 14. In the width direction W, a length d of the barrier strip 14 is greater than a width D of the battery module 12. In this way, after the battery pack 10 is assembled, the barrier strip 14 is disposed along the gap between the top of the battery module 12 and the housing 11, and two ends of the barrier strip 14 may separately extend into a gap between a side wall of the battery module 12 and an inner side wall of the housing 11. The barrier strip 14 fills at least the top of the gap, to prevent the high-temperature gas and the liquid from entering the electrical compartment 112 from the gap between the battery module 12 and the inner side wall of the housing 11. In this embodiment, in the width direction W, a difference between the length d of the barrier strip 14 and the width D of the battery compartment 111 ranges from 1 millimeter to 2 millimeters, to avoid that the barrier strip 14 is excessively long and is inconvenient for assembly.

FIG. 4 is another diagram of a battery pack according to an embodiment of this application. As shown in FIG. 4, there may be at least two barrier strips 14, and the at least two barrier strips 14 may be spaced apart. The plurality of electrochemical cells 121 include at least two electrochemical cells 121 that are close to the electrical compartment 112, and the at least two electrochemical cells 121 are sequentially disposed in the width direction W of the housing 11. The at least two barrier strips 14 and the at least two electrochemical cells 121 correspond in quantity and are disposed in a one-to-one correspondence. In the width direction W, a spacing between two adjacent barrier strips 14 of the at least two barrier strips 14 is less than or equal to a spacing between two adjacent electrochemical cells 121 of the at least two electrochemical cells 121. In this implementation, a specific quantity of barrier strips 14 may be set based on a quantity of electrochemical cells 121 disposed in the width direction W. Corresponding to each electrochemical cell 121, the barrier strip 14 may isolate a vent valve 1211 of the electrochemical cell 121 from the power module 13.

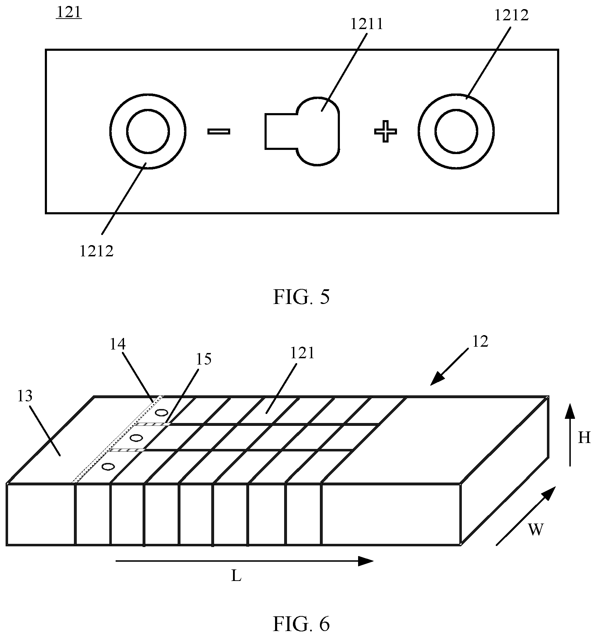

A specific location of the vent valve 1211 on the electrochemical cell 121 in this application is not limited. FIG. 5 is a diagram of an electrochemical cell according to an embodiment of this application. As shown in FIG. 5, in an embodiment, the vent valve 1211 is located on the top surface, and the vent valve 1211 is located between the two poles 1212. The two poles 1212 and the vent valve 1211 may be sequentially disposed in the width direction W of the housing 11. Alternatively, the two poles 1212 and the vent valve 1211 may be sequentially disposed in the length direction of the housing 11.

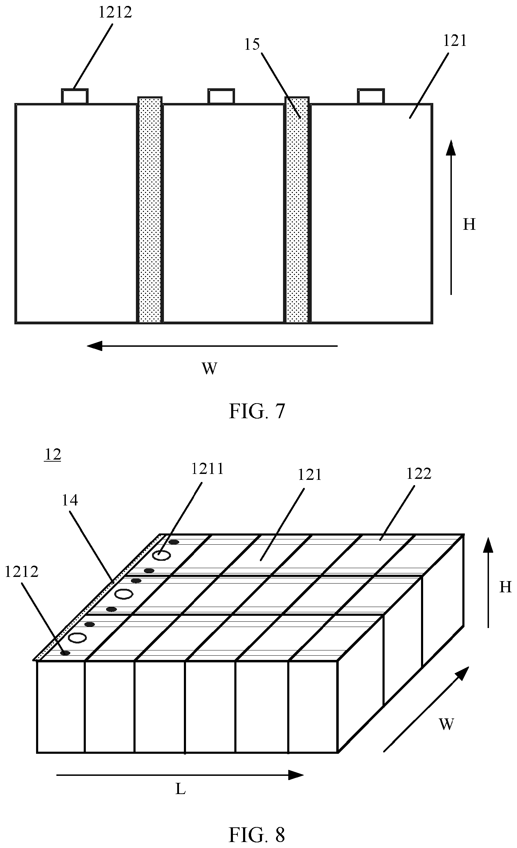

FIG. 6 is another diagram of a battery pack according to an embodiment of this application. FIG. 7 is a diagram of a battery module according to an embodiment of this application. FIG. 7 is a left view of the battery module in FIG. 2. As shown in FIG. 6 and FIG. 7, in the foregoing battery pack 10, the plurality of electrochemical cells 121 may include the at least two electrochemical cells 121 that are close to the electrical compartment 112, and the at least two electrochemical cells 121 are sequentially disposed in the width direction W of the housing 11. In the at least two electrochemical cells 121, an insulating spacer 15 is disposed between two adjacent electrochemical cells 121. In the width direction W of the housing 11, a thickness of the insulating spacer 15 is equal to a spacing between the two electrochemical cells 121, so that the insulating spacer 15 is filled between the two adjacent electrochemical cells 121, to prevent high-temperature gas and liquid that are sprayed from the vent valve 1211 from flowing into the electrical compartment 112 from a part between the two adjacent electrochemical cells 121. In the height direction H of the housing 11, a height of the insulating spacer 15 may be greater than or equal to a distance between the top surface of the electrochemical cell 121 and the bottom surface of the electrochemical cell 121. That is, the insulating spacer 15 may extend from the top surface of the electrochemical cell 121 to the bottom surface of the electrochemical cell 121, to further ensure that the high-temperature gas and the liquid do not flow into the part between two adjacent electrochemical cells 121.

In an embodiment, in the height direction H of the housing 11, the insulating spacer 15 extends out of the top surface of the electrochemical cell 121 in a direction away from the bottom surface of the electrochemical cell 121. On a side that is of the top surface of the electrochemical cell 121 and that is close to the pole 1212, a distance between the top surface and an end that is of the insulating spacer 15 and that is away from the bottom surface is greater than a height of the pole 1212. That is, the height of the insulating spacer 15 may be greater than the height of the pole 1212, to further ensure that the high-temperature gas and the liquid do not flow into the part between the two adjacent electrochemical cells 121.

In an embodiment, a difference between the height of the pole 1212 and the distance between the top surface and the end that is of the insulating spacer 15 and that is away from the bottom surface ranges from 1 millimeter to 2 millimeters, to prevent assembly of the battery module 12 from being affected due to an excessively high height of the insulating spacer 15.

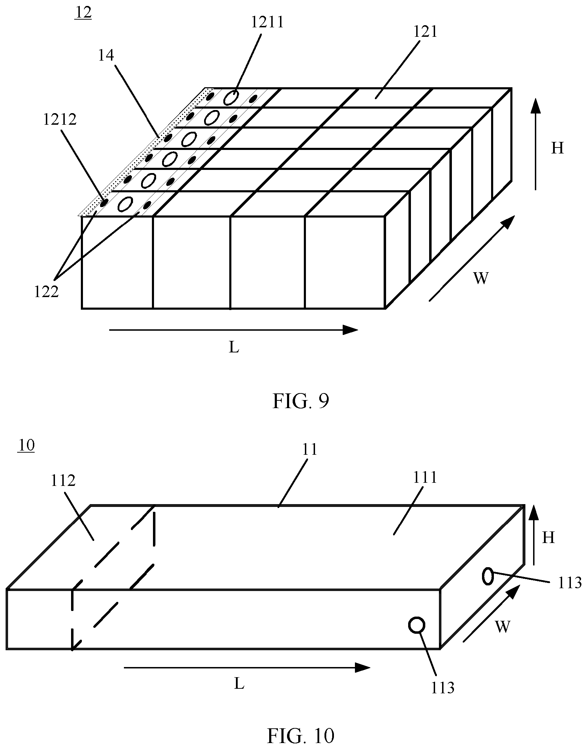

In actual application, to ensure insulation between the pole 1212 and the housing 11, the battery module 12 further includes an insulating film 122. The insulating film 122 covers the two poles 1212 of each electrochemical cell 121. In an electrochemical cell 121 that is of the plurality of electrochemical cells 121 and that is close to the electrical compartment 112, the insulating film 122 is at least partially located between the barrier strip 14 and the electrochemical cell 121. That is, the barrier strip 14 is located on a side that is of the insulating film 122 and that faces the inner wall of the housing 11. FIG. 8 is another diagram of a battery module according to an embodiment of this application. As shown in FIG. 8, in an embodiment, in each electrochemical cell 121, the vent valve 1211 and the two poles 1212 are sequentially disposed on the top surface in the width direction W of the housing 11, and the vent valve 1211 is located between the two poles 1212. Two insulating films 122 are disposed on the top surface of each electrochemical cell 121, and the two insulating films 122 extend in the length direction L of the housing 11. That is, in the plurality of electrochemical cells 121 sequentially disposed in the length direction L of the housing 11, poles 1212 that are adjacent to each other in the length direction L are covered with the same insulating film 122. Therefore, a side that is of each of the insulating films 122 and that is close to the electrical compartment 112 may be located between the barrier strip 14 and the top surface. FIG. 9 is another diagram of a battery module according to an embodiment of this application. As shown in FIG. 9, in another embodiment, in each electrochemical cell 121, the vent valve 1211 and the two poles 1212 are sequentially disposed on the top surface in the length direction L of the housing 11, and the vent valve 1211 is located between the two poles 1212. Two insulating films 122 are disposed on the top surface of each electrochemical cell 121, and the two insulating films 122 extend in the width direction W of the housing 11. That is, in the plurality of electrochemical cells 121 sequentially disposed in the width direction W of the housing 11, poles 1212 that are adjacent to each other in width in the length direction L are covered with the same insulating film 122. In addition, a part of the insulating film 122 closest to the electrical compartment 112 may be located between the barrier strip 14 and the top surface.

In another embodiment, the vent valve 1211 may alternatively be located on the bottom surface of the electrochemical cell 121. In this way, the two poles 1212 and the vent valve 1211 are located on two sides of the electrochemical cell 121, and the high-temperature gas and the liquid that are sprayed by the vent valve 1211 do not enter the electrical compartment 112 under an action of the barrier strip 14.

In addition, in an embodiment, the battery pack 10 may further include a barrier. The barrier may be disposed on a side that is of the battery module 12 and that faces the electrical compartment 112. In the width direction W of the housing 11, a length of the barrier is greater than or equal to the width of the battery module 12. In this way, the barrier may separate the battery module 12 from the electrical compartment 112 as a whole, thereby further improving safety of the battery pack 10.

FIG. 10 is a diagram of a battery pack according to an embodiment of this application. As shown in FIG. 10, in an embodiment, the housing 11 is further provided with a pressure relief vent 113 that opens when internal pressure of the battery pack 10 is excessively high, to release gas inside the battery pack 10 and avoid an explosion of the battery pack 10. The pressure relief vent 113 is located at an end that is of the battery compartment 111 and that is away from the electrical compartment 112. When the pressure relief vent 113 opens, because the barrier strip 14 can block the high-temperature gas and the liquid that are sprayed by the electrochemical cell 121 from flowing to the electrical compartment 112, the high-temperature gas and the liquid flow in a reverse direction and flow out from the pressure relief vent 113, so that the safety of the battery pack 10 is improved. In this embodiment, the pressure relief vent 113 may be located on a side wall or a bottom wall of the housing 11.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery pack, comprising a housing, wherein internal space of the housing comprises a battery compartment and an electrical compartment that are adjacently disposed in a length direction of the housing, the battery compartment is configured to accommodate a battery module, the battery module comprises a plurality of electrochemical cells, each of the plurality of electrochemical cells comprises a top surface and a bottom surface that are disposed opposite to each other in a height direction of the housing, two poles are disposed on the top surface, each electrochemical cell is further provided with a vent valve, the vent valve is located on the top surface or the bottom surface, and the electrical compartment is configured to accommodate a power module; and
in an electrochemical cell that is of the plurality of electrochemical cells and that is close to the electrical compartment, a barrier strip is disposed between a surface on which the vent valve is located and an inner wall of the housing, the barrier strip is located on a side that is of the vent valve and that faces the electrical compartment, and the barrier strip is configured to isolate the vent valve from the power module.

2. The battery pack according to claim 1, wherein in the height direction, a thickness of the barrier strip is equal to a distance between the surface on which the vent valve is located and the inner wall of the housing.

3. The battery pack according to claim 1 or 2, wherein the barrier strip extends in a width direction of the housing; and
in the width direction, a length of the barrier strip is greater than a width of the battery module.

4. The battery pack according to claim 3, wherein in the width direction, a difference between the length of the barrier strip and the width of the battery module ranges from 1 millimeter to 2 millimeters.

5. The battery pack according to claim 1 or 2, wherein the plurality of electrochemical cells comprise at least two electrochemical cells that are close to the electrical compartment, and the at least two electrochemical cells are sequentially disposed in a width direction of the housing; and
there are at least two barrier strips, the at least two barrier strips and the at least two electrochemical cells are equal in quantity and are disposed in a one-to-one correspondence, and in the width direction, a spacing between two adjacent barrier strips of the at least two barrier strips is less than or equal to a spacing between two adjacent electrochemical cells of the at least two electrochemical cells.

6. The battery pack according to any one of claims 1 to 5, wherein the vent valve is located on the top surface, and the vent valve is located between the two poles, and the two poles and the vent valve are sequentially disposed in the width direction or the length direction of the housing.

7. The battery pack according to claim 6, wherein the plurality of electrochemical cells comprise the at least two electrochemical cells that are close to the electrical compartment, the at least two electrochemical cells are sequentially disposed in the width direction of the housing, and an insulating spacer is disposed between two adjacent electrochemical cells of the at least two electrochemical cells;
in the width direction, a thickness of the insulating spacer is equal to a spacing between the two electrochemical cells; and
in the height direction, a height of the insulating spacer is greater than or equal to a distance between the top surface of the electrochemical cell and the bottom surface of the electrochemical cell.

8. The battery pack according to claim 7, wherein in the height direction, the insulating spacer extends out of the top surface in a direction away from the bottom surface, and on a side that is of the top surface and that is close to the pole, a distance between the top surface and an end that is of the insulating spacer and that is away from the bottom surface is greater than a height of the pole.

9. The battery pack according to claim 8, wherein a difference between the height of the pole and the distance between the top surface and the end that is of the insulating spacer and that is away from the bottom surface ranges from 1 millimeter to 2 millimeters.

10. The battery pack according to any one of claims 6 to 9, wherein the battery module further comprises an insulating film, the insulating film covers the two poles of each electrochemical cell, and in the electrochemical cell that is of the plurality of electrochemical cells and that is close to the electrical compartment, at least a part of the insulating film is located between the barrier strip and the electrochemical cell.

11. The battery pack according to any one of claims 1 to 10, wherein the battery pack further comprises a barrier, and the barrier is located on a side that is of the battery module and that faces the electrical compartment; and in the width direction of the housing, a length of the barrier is greater than or equal to the width of the battery module.

12. The battery pack according to any one of claims 1 to 11, wherein the housing is provided with a pressure relief vent, and the pressure relief vent is located on a side wall that is of the battery compartment and that is away from the electrical compartment.

13. An energy storage system, wherein the energy storage system comprises the battery pack according to any one of claims 1 to 12 and a power converter, and the power converter is configured to: perform power conversion on electric energy output by an external power supply, and output converted electric energy to the battery pack.
